# EUROPEAN PATENT SPECIFICATION

(11) **EP 0 366 388 B1**
(45) Date of publication and mention of the grant of the patent: **06.10.1993**
(21) Application number: 89310891.0
(22) Date of filing: 23.10.1989
(51) Int. Cl.: C01F 7/74, C02F 1/52, C01F 17/00

(54) **Method for producing aqueous solutions of basic poly aluminum sulphate**
Verfahren zur Herstellung von wässerigen Lösungen von basischem Aluminiumsulfat
Procédé de production des solutions aqueuses des sulfates d'aluminium basique

(30) Priority: 25.10.1988 US 262320
(43) Date of publication of application: 02.05.1990
(73) Proprietor: HANDY CHEMICALS LIMITED, La Prairie Quebec J5R 1Z2 (CA)
(72) Inventor: Haase, Dieter, Ste. Catherine Quebec J0L 1EO (CA); Spiratos, Nelu, LaPrairie Quebec J5R 4A1 (CA)
(74) Representative: Gaunt, Robert John

(56) References cited:
- EP-A- 0 110 847
- DE-A- 2 018 129
- US-A- 4 252 735
- US-A- 4 284 611
- PATENT ABSTRACTS OF JAPAN vol. 1, no. 17 (C-76)(920) 23 March 1977, & JP-A-51 132195 (ASAHI KAGAKU KOGYO) 17 November 1976,
- SOVIET INVENTIONS ILLUSTRATED Section CH, week84/05, 14 march 1984 no 84-028087/05

## Description

The present invention relates to a novel method for the preparation of basic poly aluminum sulphate (PAS).

Poly aluminum sulphate is a relatively new product that has been extensively developed over the past few years especially for the field of water purification where it is useful as a flocculating agent.

Various processes for the preparation of poly aluminum sulphate have been developed over the years. Traditional methods follow a partial neutralization of aluminum sulphate, referred to in the general trade (perhaps erroneously) as Alum, with hydroxyl groups from lime, caustic soda, soda ash, ammonium hydroxide or other alkali sources to a pH of approximately 3.5 to 4.3. Typically, the pH value tends to be 3.8 because aluminum hydroxide is not precipitated at or below this pH value.

Stabilizers such as phosphates, or chlorides may also be added to partially replace sulphate groups, or alternatively organic complexing agents such as sodium heptonate, citric acid, sorbitol, sodium citrate, sodium tartrate, sodium gluconate and the like may be added separately to stabilize the aqueous poly aluminum sulphate as much as possible. For a good review of the various processes that have been developed over the years for synthesizing poly aluminum sulphate, one may refer to Canadian Patents 1,123,306, 1,203,364, 1,203,664 or 1,203,665, and to U.S. patents 4,284,611 and 4,536,384.

For instance, in Canadian Patent 1,203,364 aluminum sulphate is neutralized with sodium hydroxide to prepare an aluminum hydroxide gel according to the following reaction:

$\text{4Al₂(SO₄)₃+ 24 NaOH → 8Al(OH)₃ + 12Na₂SO₄}$

Next, poly aluminum sulphate is prepared from this gel according to the following reaction:

$\text{8Al(OH)₃+ 4Al₂(SO₄)₃ → 4Al₄(OH)₆(SO₄)₃}$

This reaction yields a 50% basic product.

Using this method, 4 moles of poly aluminum sulphate and 12 moles of sodium sulphate by-product are obtained, thereby representing a significant disadvantage. A further considerable disadvantage of this method is that a "filter cake" of aluminum hydroxide gel must be prepared before the desired product can be synthesized. Therefore, this supposes a two-step process from which large amounts of by-products are obtained.

Canadian Patent 1,203,364 also teaches the neutralization of sodium aluminate with sulfuric acid to produce an amorphous aluminum hydroxide gel according to the following reaction: $\text{4Na₂Al₂O₄ + 4H₂SO₄ + 8H₂O → 8Al(OH)₃ + 4Na₂SO₄}$ 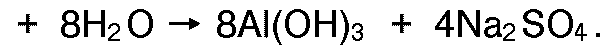 . This gel is then further reacted with aluminum sulphate to produce basic poly aluminum sulphate. Then for a 50% basic product:

$\text{8Al(OH)₃ + 4Al₂(SO₄)₃ → 4Al₄(OH)₆(SO₄)₃}$

we note that although most of the sodium sulfate is removed from the aluminum hydroxide gel through filtration, it remains nevertheless a wasted and costly by-product. Again, this is a two-step process which is difficult to perform because one must also go through the production of a "filter cake" of aluminum hydroxide gel. This yields 4 moles of by-product per 4 moles of product.

The processes described in the remaining above-mentioned patents, which do not require a prior hydroxide gel formation, still present serious drawbacks. For example, with these processes, it is difficult to produce a concentrated marketable product containing the require typical 7 to 10% of Al₂O₃ concentration because diluted alkalies must be added slowly to aluminum sulphate in order to prevent simultaneous precipitation of aluminum hydroxide. Furthermore, in most instances, by-product losses are considerable. Solutions containing substances such as calcium or sodium sulphate or ammonium sulphate are the by-products that are usually generated when the processes described in the patents cited above are used. Typically, a by-product loss ranging from 20 to 30% by weight depending on basicities produced and sources of alkali used is almost unavoidable.

Mixing and filtration problems are also associated with most of the processes known in the art. For example, when lime is used as the alkali in the process, serious mixing and filtration problems can be encountered. Also, crystallisation problems will unavoidably be encountered when sodium sulphate is formed as a by-product.

Another method of producing a flocculant for water treatment is disclosed in UK 1,399,598 published on 2 July 1975. While this method also uses high shear mixing, the process and product are different from the present invention in that basic sodium silicate and an acidic aluminium salt are mixed (page 1, lines 59 to 62) at high dilution (page 2, lines 35 to 37) to produce a stable dispersion and not a solution (page 2, lines 82 to 84) which is preferably made just prior to injection of the product into the water to be treated (page 3, lines 97 to 107).

Therefore, although the technical advantages of poly aluminum sulphate have been recognized for several years, there are still some serious problems associated with its preparation and handling. It appears that it would be highly desirable to provide a process that would minimize the losses that can be encountered through the production of by-products as well as problems associated with the separation of these by-products.

In accordance with the present invention, there is provided a process for the preparation of a basic poly aluminum sulphate solution product (PAS) having the following formula:

[Al_{A}(OH)_{B}(SO₄)_{C}(H₂O)_{E}]ₙ

in which n is a positive integer;
A is 1.0;
B ranges from 0.75 - 2.0;
C ranges from 0.5 - 1.12; and
E is larger than 4,
wherein the basicity of said basic poly aluminum sulphate solution is defined as B/3A X 100 and said basicity is 25-66% and wherein $\text{B + 2C = 3}$ ,
said process comprising the step of reacting in a one step process an aluminum sulphate solution with an alkali metal aluminate solution under high shear mixing conditions producing a velocity gradient exceeding 1000 sec⁻¹ sufficient to produce a reactive Al(OH)₃ gel and to produce a substantially transparent basic poly aluminum sulphate solution and recovering the desired product.

In this disclosure, what is meant by a "one step" process is that all the additions of reactants, their mixing, and the collection of the desired product are done in a single one step operation in a single reaction vessel, without any precipitation of a solid product or by-product which must be removed from the reaction solution by a phase separation, for example by a solid/liquid separation such as filtration to yield a filter cake.

The most important advantages resulting from the use of the product of the process of the present invention is the fact that smaller amounts of by-product for given amounts of product are produced and the formation of an aluminum hydroxide gel "filter cake" is avoided.

The process of the present invention represents a clear breakthrough in the preparation of poly aluminum sulphate because it reduces the amount of by-products to approximately 25% of the by-products that were obtained with most of the already existing methods. Furthermore, the major by-product (sodium sulphate), being obtained in lesser amounts, can be maintained in the final product to enhance its performance since the level of by-product obtained will not lead to crystallisation of sodium sulphate at ambient temperatures.

The process of the present invention will be explained in more detail in the following description.

### The product

The product to be prepared in accordance with the present invention is a basic poly aluminum sulphate solution having the following general formula:

[Al_{A}(OH)_{B}(SO₄)_{C}(H₂O)_{E}]ₙ

in which n is a positive integer;
A is 1.0;
B ranges from 0.75 - 2.0;
C ranges from 0.5 - 1.12; and
E is larger than 4 when the product is in aqueous form,
wherein the basicity of said basic poly aluminum sulphate solution is defined as B/3A X 100 and said basicity is 25-66% and wherein $\text{B + 2C = 3}$ . The value of integer n will increase as the basicity of the product increases. The basicity of the product is more generally in the range of 40-60% and preferably 45-55%. The product is also normally 7-10 wt% in Al₂O₃.

### The starting materials

Basically, two starting materials are required to perform the novel process of the present invention. First, aluminum sulphate (Alum) must be employed. Aluminum sulphate has the following formula: Al₂(SO₄)₃. The second starting material is a source of a suitable alkali metal aluminate. Although sodium aluminate is the prefered starting material, other suitable alkali metal aluminates may also be contemplated. Water is also necessary since the reaction will be performed in an aqueous medium.

### The process

The process for preparing poly aluminum sulphate in the context of the present invention involves a unique procedure in which aluminum sulphate is reacted with an alkali metal aluminate under "high shear" mixing. High shear mixing conditions are well known in the art. The fundamental definition of fluid shear rate is the velocity gradient, dv/dy which has units of reciprocal time (ft/(sec)(ft) = sec⁻¹). See J.Y. Oldshue, Fluid Mixing Technology, pub. McGraw-Hill, Publications Co., page 24 (1983). Standard high shear mixing conditions may be obtained using a Waring blender which achieves a velocity gradient exceeding 1000 sec⁻¹. (See, for example, T.R. Camp, Floc Volume Concentration, Jour. AWWA, 68:656-673 (1968)). Mixing conditions characterized by a velocity gradient exceeding 1000 sec⁻¹ are, therefore, known in the art as high shear mixing conditions. While velocity gradients as low as 1000 sec⁻¹ may be used at lower than ambient temperatures, it is preferred to use velocity gradients of 3000 sec⁻¹ or higher, because at these velocities it is easier to maintain the speed of the mixer or homogenizer.

It has been found that the high shear mixing is an essential part of the process. While not wishing to be bound by any particular theory, it is proposed that high shear mixing provides two important functions. First, it gives instantaneous high dilution of the reactants, especially the alkali metal aluminate solution, as it is injected into the other reactants. This is required to avoid local excess concentrations of the alkali aluminate, since even small local excess concentrations relative to the aluminum will result in the formation and appearance of solid gel particles. Second, the high shear mixing provides the forces needed to disintegrate any small particles of gel into a highly dispersed, and non agglomerated form.

In practice, the high shear mixing is preferably sufficient to produce a reactive gel and to produce a substantially transparent basic poly aluminium sulphate solution.

Generally speaking, reacting aluminum sulphate solution contains the equivalent of 3.8-8.5 wt.% Al₂O₃ and the reacting alkali metal aluminate solution contains the equivalent of 5.6 - 16 wt.% in Al₂O₃. During the reaction step, the pH of the resulting reaction mixture is maintained between 2.0 and 4.3 (more preferably 2.0 and 3.8). Preferably, from 5600 to 8800 (preferably 5666 to 8719) parts of aluminum sulphate solution containing the equivalent of 8.3 wt.% Al₂O₃ is cooled to a temperature that may range between 10 and 35°C. Under "high shear" rate characterized by a velocity gradient exceeding 1000 sec⁻¹, is then added from 600 to 1800 parts (preferably 639 to 1704 parts) alkali metal aluminate solution, containing the equivalent of 24 wt.% Al₂O₃ and 6% free NaOH when the alkali metal aluminate is sodium aluminate, usually contained in at least 300 to 900 (preferably 320 to 843) parts of additional water respectively over a period of time typically ranging from ¼ to 1½ hour. The reaction mixture is preferably maintained at a temperature ranging from 10 to 35°C for a period of time typically ranging from ¼ to 1½ hours after which the reaction temperature is preferably slowly increased to a range that can vary from 50 to 90°C over a period of time typically ranging from ¼ to 2½ hours. This final temperature is then normally maintained for a period of time typically ranging from ½ to 2 hours or until the mixture becomes clear. Once the resulting mixture is clear, it is cooled to room temperature. It is to be noted that for this reaction, the pH of the solution should desirably be maintained between 2.0 and 4.3 (preferably 2.0 to 3.8).

Alternatively, the alkali metal aluminate can be added to part of the required amount of aluminum sulphate, thereby producing a pH ranging from 5 to 9 in order to form a neutralized gel and the remaining required amount of aluminum sulphate can then be added to form the final reaction product. If the reaction is performed in this fashion, the pH variations during the process will usually vary from 2.0 to 9.0. As for temperatures and mixing times, the temperature, when alkali metal aluminate is added to the aluminum sulphate, will range between 10 and 35°C and will range from 35 to 90°C after the remaining amount of aluminum sulphate is added to the reaction mixture. Mixing times after addition will typically range from ¼ to 1½ hour for the first half of the reaction and from 1 to 4½ hours for the second half of the reaction.

Another alternative reaction sequence consists in adding a part of the total aluminum sulphate to the alkali metal aluminate to form a neutralized gel. This first part of the total amount of aluminum sulphate should be such as to produce a pH ranging between 5 and 9. The remaining amount of total aluminum sulphate is then added to the reaction mixture to form the final product. In this case, the pH of the reaction will vary from 14 to 3.7. As for the temperatures, they will range from 10 to 35°C for the first part of the reaction and from 35 to 90°C for the second part of the reaction. Mixing times will also vary depending on the performed step. In the first part, the mixing time after addition will typically range from ¼ to 1½ hour while it will range from 1 to 4½ hours in the second part.

It is to be noted that the process described above may also include the addition of substantial amounts of other cations such as those of iron contained in Alum when it is prepared from bauxite. Other cations, whether introduced unintentionally or otherwise, may include magnesium, calcium, zinc, zirconium and the like. Furthermore, one may also foresee the optional addition of other anions such as phosphates, chlorides, acetates, borates, carbonates or salts of organic or inorganic acids when added to the basic Alum complex.

In a preferred embodiment of the present invention, from 1000 to 1600 (preferably 1022 to 1534) parts of sodium aluminate solution containing the equivalent of 24 wt % Al₂O₃ and 6% free NaOH, contained in at least 1200 to 1900 (preferably 1244 to 1867) parts of additional water respectively is added to from 6000 to 7700 (preferably 6154 to 7620) parts of aluminum sulphate solution containing the equivalent of 8.3 wt % Al₂O₃ and which has been previously cooled to a temperature ranging from 10 to 20°C. It is to be mentioned that sodium aluminate is to be added slowly on a period of time ranging from ½ to 3/4 hour under high shear mixing. The resulting mixture is held at a temperature ranging from 10 to 20°C for a period of time ranging from ½ to 3/4 hour after which the temperature is slowly increased to 20 to 70°C over a period of time ranging from 1 to 2 hours. The mixture is held at this final temperature for 3/4 to 1½ hour or until the mixture becomes clear. The resulting mixture is then cooled and ready to use.

The equations describing the reaction for the preparation of poly aluminum sulphate when using aluminum sulphate and sodium aluminate are supposed to be as follows for the preparation of a 50% basic polyaluminum sulphate solution:

$\text{I 3Na₂Al₂O₄ + Al₂(SO₄)₃ + 12 H₂O → 8 Al(OH)₃ + 3 Na₂SO₄}$

$\text{II 8Al(OH)₃ + 4 Al₂(SO₄)₃ → 4Al₄(OH)₆(SO₄)₃}$

therefore the overall reaction is supposed to be

$\text{III 3Na₂Al₂O₄ + 5Al₂(SO₄)₃ + 12H₂O → 4Al₄(OH)₆(SO₄)₃ + 3Na₂(SO₄)}$

Thus, by using simultaneously acid and alkali aluminum salts, the product:by-product ratio obtained is substantially higher than any ratio obtained with previously known methods. Only three moles of sodium sulphate per 4 moles of final product is obtained with the method of the present invention.

One must appreciate that the important feature of the present invention is the use of high shear mixers (homogenizers) which enable the formation of the reactive Al(OH)₃ gel at a high solids content. This yields a final transparent liquid product having an equivalent concentration of Al₂O₃ ranging from 7 to 10% obtained from a unique one step procedure.

The following Examples are introduced to illustrate rather than limit the scope of the present invention. The concentrations given in the examples are those of the usually available commercially sold preparations of these chemicals. It should be understood, however, that other concentrations can be successfully used, by making the necessary adjustments to the amount of water used in making the dilutions.

### Example 1

### Preparation of polymeric basic aluminum sulphate.

700 parts of aluminum sulphate solution (28% Al₂(SO₄)₃) was added to a jacketed 1 L.flask. The mixture was cooled to 15°C and under high shear mixing, 129 parts liquid sodium aluminate (containing the equivalent of 24.0 wt.% Al₂O₃) contained in 157 parts of additional water were slowly added over one half hour. The aluminum hydroxide gel mixture was held at 10-15°C for one half hour at which time the temperature was slowly increased to 65°C over two hours. It was held for one and a half hour at 65°C until the mixture became clear and was then cooled. The product obtained contained the equivalent of 9.2% Al₂O₃ (a partial increase over theoretical due to evaporation loss) and had basicity of 50%.

### Example 2

### Preparation of polymeric basic aluminum sulphate.

284 parts water were added to 244 parts of aluminum sulphate solution and cooled to 15°C, liquid sodium aluminate (containing the equivalent of 24 wt% Al₂O₃) 135 parts diluted with 143 parts water was then added over one half hour to a pH of 6.1. The gel was mixed for one half hour under high shear. Aluminum sulphate solution (456 parts), was then added and the temperature slowly raised over 1½ hour at 58°C and held at 58°C for an additional 1½ hours. Upon clearing the product was cooled and contained the equivalent of 7 wt. % Al₂O₃ (partial increase due to evaporation loss) and a basicity of 51.5%.

### Example 3

### Preparation of polymeric basic aluminum sulphate.

To 459 parts water, were added 140 parts sodium aluminate (containing the equivalent of 24.0 wt.% Al₂O₃). Next 255 parts aluminum sulphate solution were added under high mixing at 20°C over ½ hour. The pH was 5.6 and after 3/4 hour of mixing 445 parts of aluminum sulphate solution were added, and the temperature was kept at 20°C for an additional 1½ hour. It was then increased to 58°C over 1¼ hour and held for ½ hour at which time the mixture became totally clear. The product was cooled and showed a basicity of 52.7% and contained the equivalent of 7.3 wt.% Al₂O₃.

### Example 4

### Comparison tests involving aluminum sulphate and poly aluminum sulphate (PAS) prepared in accordance with the present invention.

Tests were carried out using aluminum sulphate or poly aluminum sulphate (PAS) having a basicity of approximately 50% using water taken from the St. Lawrence River, the treatment being performed at 25°C and 8°C. The tests were carried out using aluminum sulphate as a reference and both tests used an equivalent Al₂O₃ concentration of 6.9 mg/L. Results are shown in Tables I and II for tests conducted at 8 and 25°C respectively.

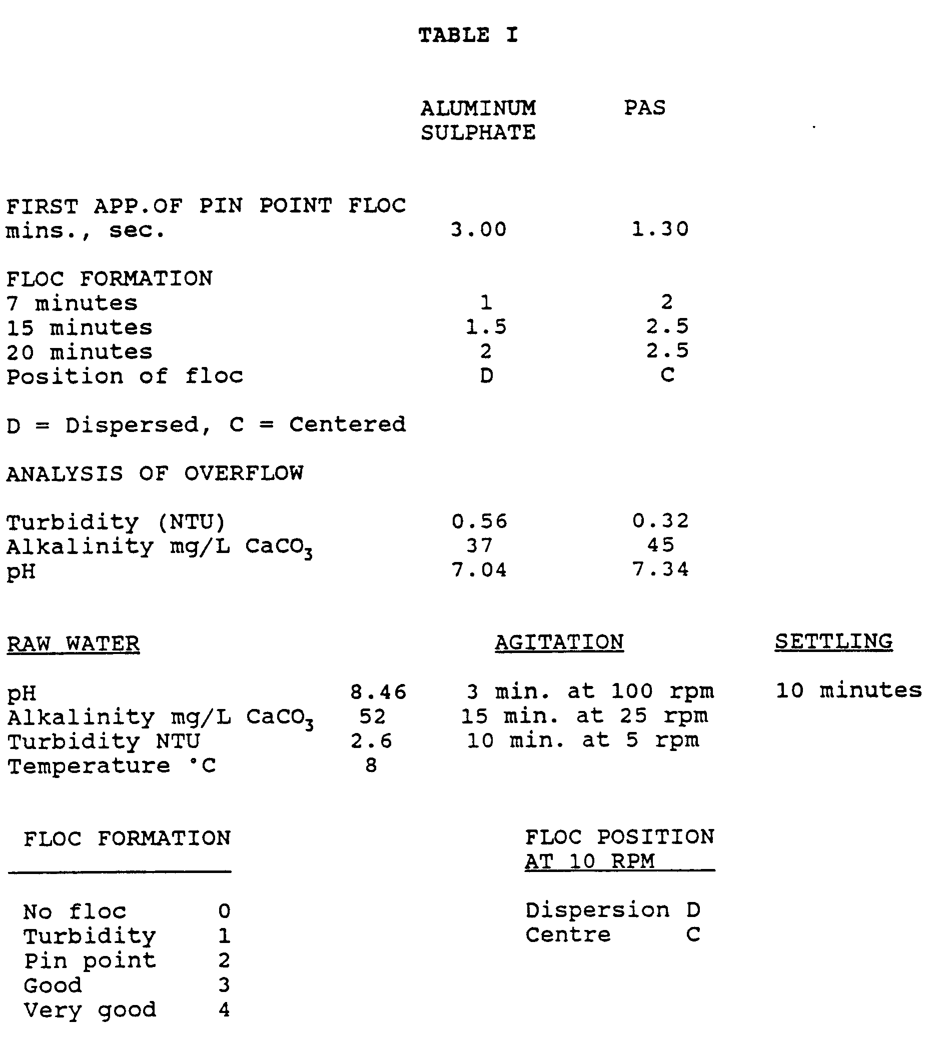

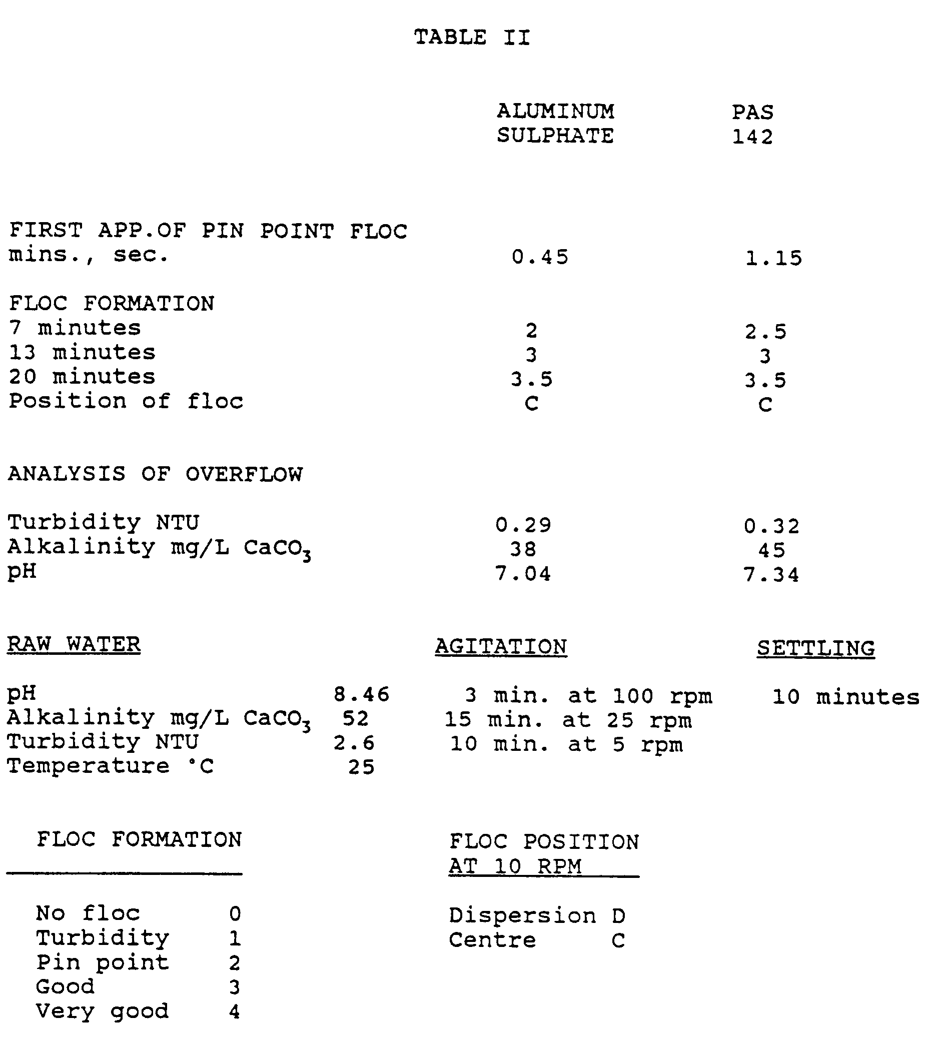

It is to be noted that in 8°C water, the residual turbidity obtained with poly aluminum sulphate (PAS) prepared in accordance with the present invention is 0.32 NTU while the residual turbidity obtained with aluminum sulphate was 0.56 NTU. Furthermore, the rate of floc development was faster and the floc larger for the poly aluminum sulphate prepared in accordance with the process of the present invention. Finally, in all cases, the alkalinity of the treated water is higher when poly aluminum sulphate (PAS) is used relative to aluminum sulphate. It is also to be noted that at 25°C, even though comparable results are obtained for both products, such warm waters are not frequently treated.

## Claims

1. A process for the preparation of a basic poly aluminum sulphate solution product having the following formula:
[Al_{A}(OH)_{B}(SO₄)_{C}(H₂O)_{E}]ₙ
in which n is a positive integer;
A is 1.0;
B ranges from 0.75 - 2.0;
C ranges from 0.5 - 1.12; and
E is larger than 4,
wherein the basicity of said basic poly aluminum sulphate solution is defined as B/3A X 100 and said basicity is 25-66% and wherein $\text{B + 2C = 3}$ , characterized in that said process comprises the step of reacting in a one step process an aluminum sulphate solution with an alkali metal aluminate solution under high shear mixing conditions producing a velocity gradient exceeding 1000 sec⁻¹ sufficient to produce a reactive Al(OH)₃ gel and to produce a substantially transparent basic poly aluminum sulphate solution and recovering the desired product.

2. A process according to claim 1, characterized in that the alkali aluminate is sodium aluminate.

3. A process according to claim 1 or claim 2, characterized in that said aluminum sulphate solution is reacted with the alkali metal aluminate at a temperature ranging between 10 and 35°C and is subsequently heated at a temperature ranging from 50 to 90°C.

4. A process according to claim 1, claim 2 or claim 3, characterized in that said basic poly aluminum sulphate solution contains additional multivalent cations.

5. A process according to claim 4, characterized in that said multivalent cations are selected from the group consisting of iron, magnesium, calcium, zinc and zirconium.

6. A process according to any preceding claim, characterized in that said basic poly aluminum sulphate solution contains additional anions selected from the group consisting of salts of organic and inorganic acids, such that the ratio C/A is greater than 0.5, but less than 1.12.

7. A process according to claim 6, characterized in that said anions are selected from the group consisting of phosphate, acetate, borate, chloride and carbonate anions.

8. A process according to claim 2, characterized in that said basicity is from 40-60% and the pH of said reaction mixture is maintained between 2.0 and 4.3.

9. A process according to claim 2, characterized in that said basicity is 45-55%.

10. A process according to any preceding claim, characterized in that said aluminum sulphate solution and said alkali aluminate solution are initially mixed under high shear mixing.

11. A process according to any preceding claim, characterized in that said aluminum sulphate solution contains the equivalent of 3.8 to 8.5 wt.% Al₂O₃.

12. A process according to any preceding claim, characterized in that said alkali metal aluminate solution contains the equivalent of 5.6 to 16 wt.% Al₂O₃.

13. A process according to any preceding claim, characterized in that during said reacting step, the pH of the resulting reaction mixture is maintained between 2.0 and 4.3.

14. A process according to claim 2, characterized in that from 5600 to 8800 parts by weight of said aluminum sulphate solution having a concentration in aluminum sulphate equivalent to 8.3 wt.% Al₂O₃ is reacted with from 600 to 1800 parts by weight of said sodium aluminate solution having a concentration equivalent to about 24 wt.% in Al₂O₃ and about 6% free NaOH contained in from 300 to 900 parts by weight water.

15. A process according to claim 2, characterized in that from 6100 to 7700 parts by weight of said aluminum sulphate solution having a concentration in aluminum sulphate equivalent to about 8.3 wt.% Al₂O₃ is reacted with 1000 to 1600 parts by weight of said sodium aluminate solution having a concentration equivalent to about 24 wt.% Al₂O₃ and about 6 wt.% free NaOH contained in from 1200 to 1900 parts of water, wherein the basicity of said basic poly aluminum sulphate solution is between 40-60%.

16. A process according to any preceding claim, characterized in that said basic poly aluminum sulphate solution contains the equivalent of 7-10 wt.% Al₂0₃.

## Patentansprüche

1. Ein Verfahren zur Herstellung eines gelösten Produkts von basischem Polyaluminiumsulfat mit der folgenden Formel:
[Al_{A}(OH)_{B}(SO₄)_{C}(H₂O)_{E}]ₙ
in der n eine positive ganze Zahl ist,
A 1,0 ist,
B zwischen 0,75 und 2,0 liegt,
C zwischen 0,5 und 1,12 liegt, und
E größer ist als 4,
worin die Basizität des genannten basischen Polyaluminiumsulfats als B/3A x 100 definiert wird, die genannte Basizität 22-66% beträgt und B + 2C 3 ist, dadurch gekennzeichnet, daß dieses Verfahren die Umsetzung einer Aluminiumsulfatlösung mit einer Alkalimetall-aluminatlösung in einem einstufigen Verfahren unter den Bedingungen einer Schnellschermischung, die einen Geschwindigkeitsgradienten oberhalb von 1000 Sek.⁻¹ erzeugt, der ausreicht, um ein reaktives Al(OH)₃-Gel und eine im wesentlichen transparente Lösung von basischem Polyaluminiumsulfat herzustellen, und die Aufbereitung des gewünschten Produkts umfaßt.

2. Ein Verfahren gemäß Anspruch 1, dadurch gekennzeichnet, daß das Alkalialuminat Natriumaluminat ist.

3. Ein Verfahren gemäß den Ansprüchen 1 oder 2, dadurch gekennzeichnet, daß die genannte Aluminiumsulfatlösung mit dem Alkalialuminat bei einer Temperatur zwischen 10 und 35°C umgesetzt und anschließend auf eine Temperatur von 50 bis 90°C erhitzt wird.

4. Ein Verfahren gemäß den Ansprüchen 1, 2 oder 3, dadurch gekennzeichnet, daß die genannte basische Polyaluminiumsulfatlösung zusätzliche mehrwertige Kationen enthält.

5. Ein Verfahren gemäß Anspruch 4, dadurch gekennzeichnet, daR die genannten multivalenten Kationen aus der Gruppe ausgewählt sind, die aus Eisen, Magnesium, Calcium, Zink und Zirkon besteht.

6. Ein Verfahren gemäß jedem der vorhergehenden Ansprüche, dadurch gekennzeichnet, daß die basische Polyaluminiumsulfatlösung zusätzliche Anionen enthält, die aus der Gruppe ausgewählt sind, die aus Salzen von anorganischen und organischen Säuren besteht, wobei das Verhältnis C/A größer als 0,5, aber kleiner als 1,12 ist.

7. Ein Verfahren gemäß Anspruch 6, dadurch gekennzeichnet, daß die genannten Anionen aus der Gruppe ausgewählt sind, die aus Phosphat-, Acetat-, Borat-, Chlorid und Karbonat-anionen besteht.

8. Ein Verfahren gemäß Anspruch 2, dadurch gekennzeichnet, daß die genannte Basizität zwischen 40-60% liegt und der pH-Wert der genannten Reaktionsmischung zwischen 2,0 und 4,3 gehalten wird.

9. Ein Verfahren gemäß Anspruch 2, dadurch gekennzeichnet, daß die genannte Basizität 45-55% beträgt.

10. Ein Verfahren gemäß jedem der vorhergehenden Ansprüche, dadurch gekennzeichnet, daß die genannte Aluminiumsulfatlösung und die genannte Alkalialuminatlösung am Anfang mittels Schnellschermischung gemischt werden.

11. Ein Verfahren gemäß jedem der vorhergehenden Ansprüche, dadurch gekennzeichnet, daß die genannte Aluminiumsulfatlöung das Äquivalent von 3,8 bis 8,5 Gew.% Al₂O₃ enthält.

12. Ein Verfahren gemäß jedem der vorhergehenden Ansprüche, dadurch gekennzeichnet, daß die genannte Alkalimetallaluminatlösung das Äquivalent von 5,6 bis 16 Gew.% Al₂O₃ enthält.

13. Ein Verfahren gemäß jedem der vorhergehenden Ansprüche, dadurch gekennzeichnet, daß während der genannten Reaktion der pH-Wert zwischen 2,0 und 4,3 gehalten wird.

14. Ein Verfahren gemäß Anspruch 2, dadurch gekennzeichnet, daR 5600 bis 8800 Gewichtsteile der genannten Aluminiumsulfatlösung mit einer Konzentration an Aluminiumsulfat, die 8,3 Gew.% Al₂O₃ äquivalent ist, mit 600 bis 1800 Gewichtsteilen der genannten Natriumaluminatlösung mit einer Konzentration, die etwa 24 Gew.% Al₂O₃ äquivalent ist, und mit etwa 6% freiem NaOH, enthalten in 300 bis 900 Gewichtsteilen Wasser, umgesetzt wird.

15. Ein Verfahren gemäß Anspruch 2, dadurch gekennzeichnet, daß 6100 bis 7700 Gewichtsteile der genannten Aluminiumsulfatlösung mit einer Konzentration an Aluminiumsulfat, die etwa 8,3 Gew.% Al₂O₃ äquivalent ist, mit 1000 bis 1600 Gewichtsteilen der genannten Natriumaluminatlösung mit einer Konzentration, die etwa 24 Gew.% Al₂O₃ äquivalent ist, und mit etwa 6% freiem NaOH, enthalten in 1200 bis 1900 Teilen Wasser, umgesetzt wird, worin die Basizität der genannten Lösung von basischem Polyaluminiumsulfat 40-60% beträgt.

16. Ein Verfahren gemäß jedem der vorhergehenden Ansprüche, dadurch gekennzeichnet, daß die genannte Lösung von basischem Polyaluminiumsulfat das Äquivalent von 7-10 Gew.% Al₂O₃ enthält.

## Revendications

1. Procédé de production d'une solution de polysulfate d'aluminium basique correspondant à la formule suivante:
[Al_{A}(OH)_{B}(SO₄)_{C}(H₂O)_{E}]ₙ
dans laquelle n est un entier positif;
A est égal à 1,0;
B varie de 0,75 à 2,0;
C varie de 0,5 à 1,12; et
E est supérieur à 4,
l'alcalinité de la solution de polysulfate d'aluminium basique étant définie par B/3Ax100, et cette alcalinité étant de 25 à 66 % et $\text{B + 2C = 3}$ , caractérisé en ce qu'on fait réagir en une étape, une solution de sulfate d'aluminium, avec une solution d'aluminate de métal alcalin, dans des conditions de mélange à fort cisaillement procurant un gradient de vitesse supérieur à 1000 s⁻¹ suffisant pour produire un gel d'Al(OH)₃ réactif et une solution de polysulfate d'aluminium basique à peu près transparente, et on récupère le produit requis.

2. Procédé selon la revendication 1, caractérisé en ce que l'aluminate alcalin est l'aluminate de sodium.

3. procédé selon la revendication 1 ou 2, caractérisé en ce qu'on fait réagir cette solution de sulfate d'aluminium à une température de 10 à 35 °C, et en ce qu'on la chauffe ensuite à une température de 50 à 90 °C.

4. Procédé selon la revendication 1, 2 ou 3, caractérisé en ce que la solution de polysulfate d'aluminium basique contient des cations multivalents supplémentaires.

5. Procédé selon la revendication 4, caractérisé en ce que ces cations multivalents sont choisis parmi le fer, le magnésium, le calcium, le zinc et le zirconium.

6. Procédé selon l'une quelconque des revendications précédentes, caractérisé en ce que la solution de polysulfate d'aluminium basique, contient des anions supplémentaires choisis parmi les sels d'acides organiques et inorganiques, de telle façon que le rapport C/A soit supérieur à 0,5, mais inférieur à 1,12.

7. Procédé selon la revendication 6, caractérisé en ce que ces anions sont choisis parmi les anions phosphate, acétate, borate, chlorure et carbonate.

8. Procédé selon la revendication 2, caractérisé en ce que l'alcalinité est de 40 à 60 %, et en ce que le pH du mélange réactionnel est maintenu à 2,0 jusqu'à 4,3.

9. Procédé selon la revendication 2, caractérisé en ce que l'alcalinité est de 45 à 55 %.

10. Procédé selon l'une quelconque des revendications précédentes, caractérisé en ce que la solution de sulfate d'aluminium et la solution d'aluminate alcalin, sont mélangées initialement dans des conditions de mélange à fort cisaillement.

11. Procédé selon l'une quelconque des revendications précédentes, caractérisé en ce que la solution de sulfate d'aluminium contient l'équivalent de 3,8 à 8,5 % en poids d'Al₂O₃.

12. Procédé selon l'une quelconque des revendications précédentes, caractérisé en ce que la solution d'aluminate de métal alcalin, contient l'équivalent de 5,6 à 16 % en poids d'Al₂O₃.

13. Procédé selon l'une quelconque des revendications précédentes, caractérisé en ce qu'au cours de l'étape réactionnelle, le pH du mélange réactionnel résultant, est maintenu à 2,0 jusqu'à 4,3.

14. Procédé selon la revendication 2, caractérisé en ce que l'on fait réagir de 5600 à 8800 parties en poids de la solution de sulfate d'aluminium ayant une concentration en sulfate d'aluminium équivalente à 8,3 % en poids d'Al₂O₃, avec de 600 à 1800 parties en poids de la solution d'aluminate de sodium ayant une concentration équivalente à environ 24 % en poids d'Al₂O₃ et environ 6 % de NaOH libre contenu dans 300 à 900 parties en poids d'eau.

15. Procédé selon la revendication 2, caractérisé en ce qu'on fait réagir de 6100 à 7700 parties en poids de la solution de sulfate d'aluminium ayant une concentration en sulfate d'aluminium équivalente à environ 8,3 % en poids d'Al₂O₃, avec 1000 à 1600 parties en poids de la solution d'aluminate de sodium ayant une concentration équivalente à environ 24 % en poids d'Al₂O₃ et environ 6 % en poids de NaOH libre contenu dans 1200 à 1900 parties d'eau, l'alcalinité de la solution de polysulfate d'aluminium basique étant de 40 à 60 %.

16. Procédé selon l'une quelconque des revendications précédentes, caractérisé en ce que la solution de polysulfate d'aluminium basique contient l'équivalent de 7 à 10 % en poids d'Al₂O₃.
